# EUROPÄISCHE PATENTANMELDUNG

(11) **EP 4 552 908 A1**
(43) Veröffentlichungstag der Anmeldung: **14.05.2025**
(21) Anmeldenummer: 24211664.8
(22) Anmeldetag: 08.11.2024
(51) Int. Cl.: B60L 53/10, B60L 53/62, B60L 53/65, B60L 53/66, H02M 3/337

(54) **SCHNELLLADESTATION FÜR ELEKTROFAHRZEUGE**

(30) Priorität: 08.11.2023 DE 102023131000
(71) Anmelder: Compleo Charging Solutions GmbH & Co. KG, 58513 Lüdenscheid (DE)
(72) Erfinder: WOHLFAHRT, Thomas, 45721 Haltern am See (DE); SALEH, Bassem, 44147 Dortmund (DE); PALOJA, Imer, 58285 Gevelsberg (DE)
(74) Vertreter: Gottschald Patentanwälte Partnerschaft mbB

(57) **Zusammenfassung**

Die Erfindung betrifft eine Schnellladestation für Elektrofahrzeuge, wobei die Schnellladestation (1) eine Steuereinheit (5) und eine Stromrichteranordnung (4) zur Wandlung einer Wechselspannung als Eingangsspannung der Schnellladestation (1) in eine Gleichspannung als Ausgangsspannung der Schnellladestation (1) aufweist, wobei die Stromrichteranordnung (4) als zwei einander ausschließende Funktionszustände einen ersten und einen zweiten Funktionszustand aufweist, die von der Steuereinheit (5) an der Stromrichteranordnung (4) eingestellt werden können, wobei die Stromrichteranordnung (4) in den Funktionszuständen unterschiedliche Ausgangsspannungsbereiche abdeckt, wobei die Steuereinheit (5) eine Kommunikation mit einem an die Schnellladestation (1) angeschlossenen Elektrofahrzeug und/oder Messwerte betreffend das Elektrofahrzeug auswertet und so Batterieparameter erhält und abhängig von den Batterieparametern den Funktionszustand einstellt. Es wird vorgeschlagen, dass die Ausgangsspannungsbereiche der beiden Funktionszustände einander in einem Überlappbereich (9) überlappen, dass die Batterieparameter eine Ist-Ladespannung (7) umfassen, und dass die Steuereinheit (5), wenn die Ist-Ladespannung (7) im Überlappbereich (9) liegt, abhängig von den Batterieparametern einen der Funktionszustände auswählt, um das Elektrofahrzeug zu laden.

## Beschreibung

Die vorliegende Erfindung betrifft eine Schnellladestation für Elektrofahrzeuge gemäß dem Oberbegriff von Anspruch 1 sowie ein Verfahren zum Betrieb einer Schnellladestation gemäß dem Oberbegriff von Anspruch 14.

Schnellladestationen, auch bekannt als high performance charger, sind Gleichstromladestationen für elektrische Fahrzeuge, insbesondere Automobile, aber auch Lastkraftfahrzeuge, Schiffe und dergleichen.

Der bekannte Stand der Technik (EP 4 109 724 A1), von dem die Erfindung ausgeht, betrifft eine Schnellladestation gemäß dem Oberbegriff von Anspruch 1. Diese weist eine Steuereinheit und eine Stromrichteranordnung zur Wandlung einer Wechselspannung als Eingangsspannung der Schnellladestation in eine Gleichspannung als Ausgangsspannung der Schnellladestation auf. Die Stromrichteranordnung weist als zwei einander ausschließende Funktionszustände einen ersten und einen zweiten Funktionszustand auf, die von der Steuereinheit an der Stromrichteranordnung eingestellt werden können, wobei die Stromrichteranordnung in den Funktionszuständen unterschiedliche Ausgangsspannungsbereiche abdeckt. Die Steuereinheit wertet eine Kommunikation mit einem an die Schnellladestation angeschlossenen Elektrofahrzeug und/oder Messwerte betreffend das Elektrofahrzeug aus und erhält so Batterieparameter. Abhängig von den Batterieparametern stellt die Steuereinheit den Funktionszustand ein. Konkret kann die bekannte Stromrichteranordnung zwischen einem Funktionszustand, in dem ein DC/DC Wandler ausgangsseitig "nur" als Gleichrichter betrieben wird und einem Funktionszustand, in dem der DC/DC Wandler ausgangsseitig als Ladungspumpe betrieben wird, umgeschaltet werden. Im zweiten Funktionszustand wird die Ausgangsspannung verdoppelt (idealerweise, ohne Verlustbetrachtung). So ist die bekannte Schnellladestation an Elektrofahrzeuge mit unterschiedlichen Batteriespannungen angepasst und kann beispielsweise Elektrofahrzeuge mit 400 V und 800 V Batterien laden.

Eine Herausforderung dabei ist allerdings, dass Batterien von Elektrofahrzeugen während eines Ladevorgangs ihre Spannung verändern und theoretisch beliebige Maximalspannungen im von der Schnellladestation abgedeckten Bereich aufweisen können. Eine zukunftsfähige Schnellladestation muss daher eine hohe Flexibilität der Ausgangsspannung auch während eines Ladevorgangs aufweisen. Bei der bekannten Schnellladestation ist ein Umschalten der Funktionszustände während eines Ladevorgangs nicht vorgesehen, da sich dadurch die an den Ausgangskondensatoren anliegenden Potentiale schlagartig ändern würden oder ein aufwändiges Umladen der Kondensatoren erforderlich wäre. Weist der erste Funktionszustand beispielhaft einen Ausgangsspannungsbereich von 200 V bis 400 V auf und der zweite Funktionszustand einen Ausgangsspannungsbereich von 400 V bis 920 V, so stellt sich die Frage, wie mit einem Elektrofahrzeug mit einer Ist-Batteriespannung von 395V umgegangen werden soll, wenn zu erwarten ist, dass die Batteriespannung durch das Laden auf über 400 V steigt.

Der Erfindung liegt das Problem zugrunde, die bekannte Schnellladestation derart auszugestalten und weiterzubilden, dass Elektrofahrzeuge mit unterschiedlichen Batteriespannungen effizienter geladen werden können.

Das obige Problem wird durch die Merkmale des kennzeichnenden Teils von Anspruch 1 gelöst.

Wesentlich ist die grundsätzliche Überlegung, dass die Funktionszustände so ausgestaltet werden können, dass ihre Ausgangsspannungsbereiche überlappen. Im genannten Fall könnte also der erste Funktionszustand bspw. 200 V bis 500 V abdecken und der zweite Funktionszustand könnte 400 V bis 920 V abdecken. Ein Elektrofahrzeug mit einer Ist-Batteriespannung von 395 V kann dann voraussichtlich vollständig im ersten Funktionszustand geladen werden, während ein Elektrofahrzeug mit 495 V Ist-Batteriespannung vollständig im zweiten Funktionszustand geladen werden kann, obwohl 495 V auch vom ersten Funktionszustand abgedeckt werden könnten. Die Ausgangsspannungsbereiche werden dabei bei der bekannten Schnellladestation durch eine Eingangsspannung, insbesondere eines DC/DC Wandlers, dessen Wicklungsverhältnis und die Ansteuerung (Buck/Boost-Fähigkeit), insbesondere die Ausgestaltung der PWMs der Halbleiterschalter, definiert und sind steuerungstechnisch hinterlegt.

Im Einzelnen wird vorgeschlagen, dass die Ausgangsspannungsbereiche der beiden Funktionszustände einander in einem Überlappbereich überlappen, dass die Batterieparameter eine Ist-Ladespannung umfassen, und dass die Steuereinheit, wenn die Ist-Ladespannung im Überlappbereich liegt, abhängig von den Batterieparametern einen der Funktionszustände auswählt, um das Elektrofahrzeug zu laden.

Gemäß Anspruch 2 wird vorgeschlagen, dass die Steuereinheit bei der Auswahl des Funktionszustands eine Ziel-Ladespannung, beispielsweise eine vom Elektrofahrzeug kommunizierte maximale Ladespannung, berücksichtigt. So kann individuell berücksichtigt werden, welcher Spannungshub während eines Ladevorgangs zu erwarten ist.

Anspruch 3 gibt bevorzugte Ausgangsspannungsbereiche an.

Anspruch 4 erläutert, wie ein Umschalten zwischen den Funktionszuständen während eines Ladevorgangs vorzugsweise vermieden werden kann.

Sofern beide Ausgangsspannungsbereiche ohne Umschalten verwendbar wären, wird vorzugsweise die Effizienz des Ladevorgangs bei der Auswahl des Funktionszustandes berücksichtigt (Anspruch 5). Das trägt dem Umstand Rechnung, dass die Funktionszustände zumeist unterschiedliche Effizienzkurven aufweisen werden, sodass die Auswahl nicht beliebig ist.

Die Ansprüche 6 bis 11 betreffen bevorzugte schaltungstechnische Ausgestaltungen des Stromwandlers. Gemäß Anspruch 6 können vorzugsweise zwei Stufen vorgesehen sein, von denen eine zweite Stufe als DC/DC Wandler ausgestaltet ist, der wiederum vorzugsweise in einem Funktionszustand seine Ausgangsspannung durch ein Umschalten in eine Funktionalität als Ladungspumpe verdoppelt. Anspruch 7 betrifft eine bevorzugte Abwandlung einer Dual-Active-Bridge als DC/DC Wandler. Zur Erläuterung wird auch auf die genannte EP 4 109 724 A1 verwiesen. Gemäß Anspruch 8 ist ein Umschalten unter Last zwischen den Funktionszuständen ausgeschlossen.

Die Ansprüche 9 bis 11 betreffen Ausgestaltungen mit erhöhter Effizienz bei verbesserter Abstimmung auf häufiger anzutreffende Batterienennspannungen von 400 V und 800 V. Dafür wird bei Ausgestaltungen gemäß der Ansprüche 10 und 11 auch in Kauf genommen, dass zwischen einem Boost-Betrieb und einem Buck-Betrieb des DC/DC Wandlers gewechselt werden muss, das allerdings vorzugsweise nahtlos über eine Phase-Shift Ansteuerung.

Bei einer Ausgestaltung gemäß Anspruch 12 weist die Schnellladestation mehrere Leistungsmodule mit Stromrichteranordnungen auf. Anspruch 13 gibt eine bevorzugte Stromnetzkonfiguration an, auf die die Schnellladestation optimiert sein kann.

Nach einer weiteren Lehre gemäß Anspruch 14, der eigenständige Bedeutung zukommt, wird ein Verfahren zum Betrieb einer Schnellladestation beansprucht.

Dabei ist wesentlich, dass die Ausgangsspannungsbereiche der beiden Funktionszustände einander in einem Überlappbereich überlappen, dass die Batterieparameter eine Ist-Ladespannung umfassen, und dass die Steuereinheit, wenn die Ist-Ladespannung im Überlappbereich liegt, abhängig von den Batterieparametern einen der Funktionszustände auswählt, um das Elektrofahrzeug zu laden.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine Schnellladestation von außen,
- Fig. 2: eine Schnelladestation mit Leistungsmodulen,
- Fig. 3: einen DC/DC Wandler,
- Fig. 4: Ausgangsspannungsbereiche und deren Ausnutzung bei unterschiedlichen exemplarischen Ladevorgängen und
- Fig. 5: einen Transformator mit integrierter Spule.

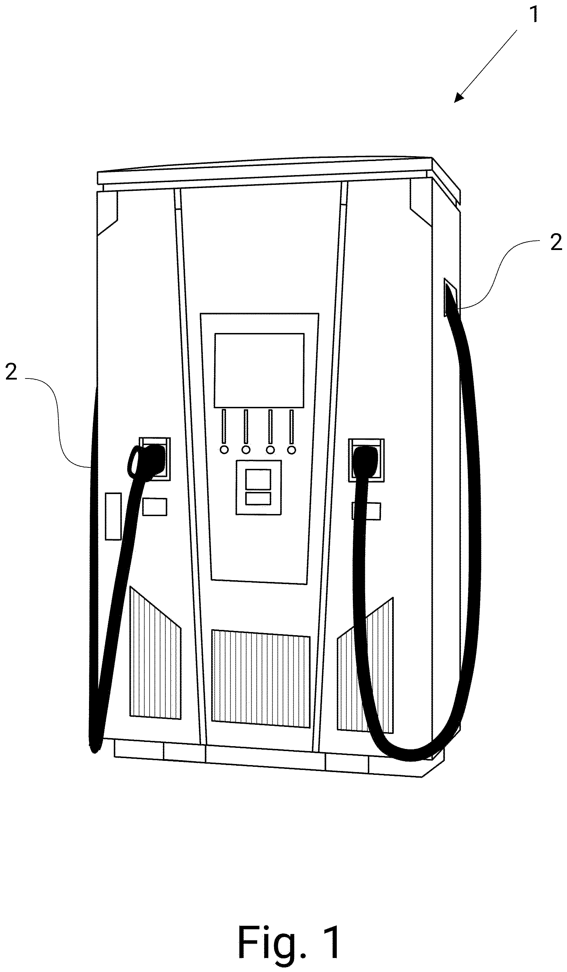

Fig. 1 zeigt eine Außenansicht einer vorschlagsgemäßen Schnellladestation 1 für Elektrofahrzeuge. Diese weist mindestens einen Anschlusspunkt 2 für ein Elektrofahrzeug, hier ein fest angeschlagenes Ladekabel, auf. Vorzugsweise weist die Schnellladestation 1 mindestens, hier genau, zwei Anschlusspunkte 2 auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

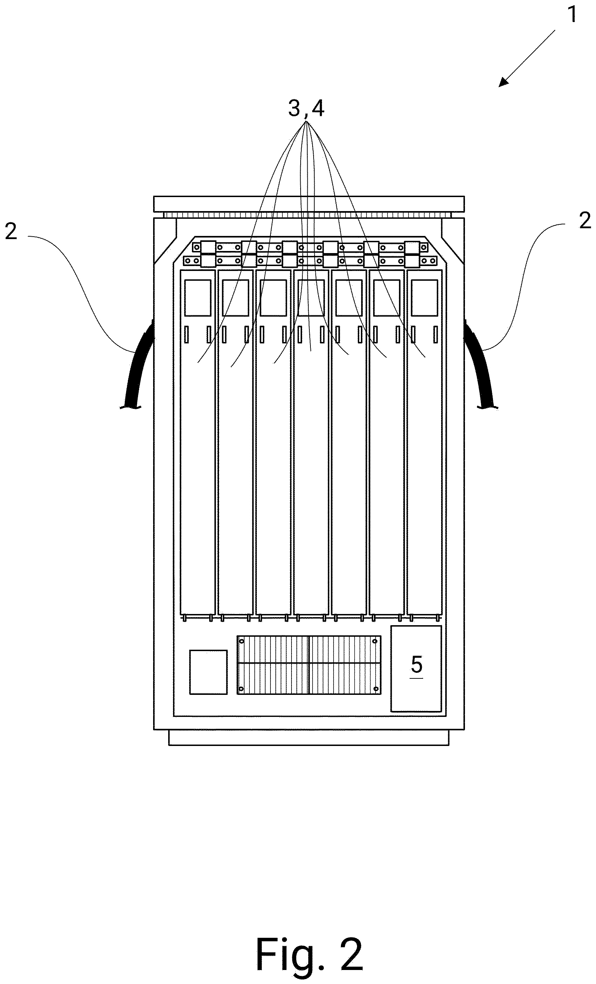

Hier und vorzugsweise weist die Schnellladestation 1 mindestens ein einzeln handhabbares Leistungsmodul 3 auf. Vorzugsweise weist die Schnellladestation 1 sieben Leistungsmodule 3 auf, die jeweils einen Teil der Gesamtleistung der Schnellladestation 1 zur Verfügung stellen, hier beispielsweise jeweils 30 kW (Fig. 2). Die Leistungsmodule 3 können hier und vorzugsweise flexibel auf die Anschlusspunkte 2 aufgeteilt werden. So kann beispielsweise ein Anschlusspunkt 2 zeitweise nur bis zu 60 kW abgeben und der andere bis zu 150 kW. Zu einem anderen Zeitpunkt hingegen kann die Aufteilung beispielsweise 120 kW zu 90 kW sein.

Der Begriff "einzeln handhabbar" ist hier breit zu verstehen. Das Leistungsmodul 3 wiegt hier beispielsweise etwa 39 kg, ist also nicht leicht handhabbar. Es ist jedoch einzeln herausnehmbar und die Komponenten des Leistungsmoduls 3 sind gerade nicht einzeln in der Schnellladestation 1 verbaut.

Betrachtet wird nun zuerst nur eine Stromrichteranordnung 4 für ein Leistungsmodul 3, alle Aussagen zu diesem Leistungsmodul 3 können für weitere Leistungsmodule 3 entsprechend gelten.

Das in den Figuren dargestellte und insoweit bevorzugte Ausführungsbeispiel betrifft eine Schnellladestation 1 für Elektrofahrzeuge, wobei die Schnellladestation 1 eine Steuereinheit 5 und eine Stromrichteranordnung 4 zur Wandlung einer Wechselspannung als Eingangsspannung der Schnellladestation 1 in eine Gleichspannung als Ausgangsspannung der Schnellladestation 1 aufweist.

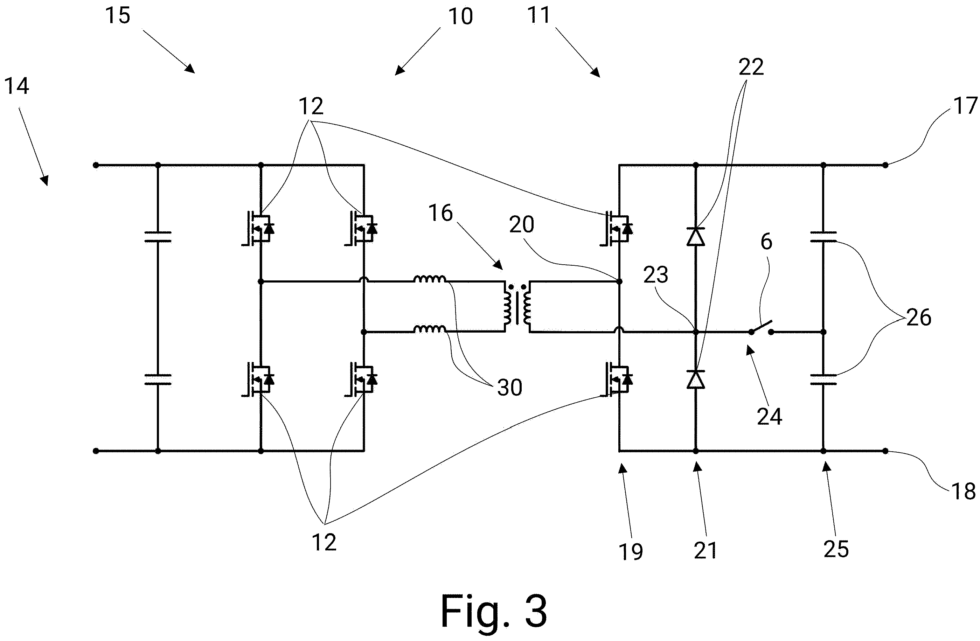

Mit Blick auf die in Fig. 3 dargestellte Schaltung, jedoch auch ganz allgemein, weist die Stromrichteranordnung 4 als zwei einander ausschließende Funktionszustände einen ersten und einen zweiten Funktionszustand auf, die von der Steuereinheit 5 an der Stromrichteranordnung 4 eingestellt werden können. Dazu dient hier und vorzugsweise ein noch zu erläuterndes Schaltelement 6.

Die Stromrichteranordnung 4 deckt in den Funktionszuständen unterschiedliche Ausgangsspannungsbereiche ab. Das liegt hier und vorzugsweise daran, dass die Schaltung gemäß Fig. 3 bei geschlossenem Schaltelement 6 als Ladungspumpe fungiert und die Ausgangsspannung damit verdoppelt werden kann. Andere Ausgestaltungen und Kaskadierungen sind ebenfalls denkbar.

Die Steuereinheit 5 wertet eine Kommunikation mit einem an die Schnellladestation 1 angeschlossenen Elektrofahrzeug und/oder Messwerte betreffend das Elektrofahrzeug aus und erhält so Batterieparameter. Abhängig von den Batterieparametern stellt die Steuereinheit 5 den Funktionszustand ein. Die Batterieparameter können über eine Control Pilot / Power Line Communication Kommunikation zwischen Schnellladestation 1 und Elektrofahrzeug übertragen werden und beispielsweise eine Ist-Ladespannung 7, eine Maximal-Ladespannung 8 und einen gewünschten Ist-Strom umfassen. Die Ist-Ladespannung 7 kann alternativ auch in der Schnellladestation 1 gemessen werden.

Wesentlich ist nun, dass die Ausgangsspannungsbereiche der beiden Funktionszustände einander in einem Überlappbereich 9 überlappen. Die Ausgangsspannungsbereiche hängen hier und vorzugsweise von einer Eingangsspannung der Schaltung gemäß Fig. 3, hier und vorzugsweise 800 V, einem Wicklungsverhältnis zwischen Eingangsseite 10 und Ausgangsseite 11 der Schaltung gemäß Fig. 3, hier und vorzugsweise 16:9, und der Ansteuerung der Halbleiterschaltelemente 12 ab. Hier und vorzugsweise werden die Halbleiterschaltelemente 12 per Phase-Shift Ansteuerung geschaltet. Diese ist hier und vorzugsweise so gewählt, dass ein Buck-Betrieb und ein Boost-Betrieb möglich sind und der Übergang zwischen Buck-Betrieb und Boost-Betrieb nahtlos möglich ist, also weder der duty cycle noch die Phasenverschiebung eines Halbleiterschaltelementes 12 zwischen Buck-Betrieb und Boost-Betrieb einen Sprung macht.

Die Batterieparameter umfassen eine Ist-Ladespannung 7. Die Steuereinheit 5 wählt, wenn die Ist-Ladespannung 7 im Überlappbereich 9 liegt, abhängig von den Batterieparametern einen der Funktionszustände aus, um das Elektrofahrzeug zu laden. Der Funktionszustand, insbesondere in Form des Zustands des Schaltelements 6, wird hier und vorzugsweise vor Beginn des Ladevorgangs 13 für den gesamten Ladevorgang 13 festgelegt und während des Ladevorgangs 13 nicht geändert.

Bevorzugt ist es dabei so, dass die Batterieparameter eine Ziel-Ladespannung umfassen und dass die Steuereinheit 5 abhängig von der Ziel-Ladespannung den Funktionszustand auswählt, um das Elektrofahrzeug zu laden. Die Ziel-Ladespannung kann die Maximal-Ladespannung 8 sein, sie kann jedoch auch geringer als die Maximal-Ladespannung 8 sein. Insbesondere kann die Ziel-Ladespannung ein Bruchteil der Ziel-Ladespannung, beispielsweise 80 % oder 90 %, sein. Elektrofahrzeuge werden an Schnellladestationen 1 nur selten auf 100 % aufgeladen. Auch könnte die Ziel-Ladespannung vom Elektrofahrzeug kommuniziert werden.

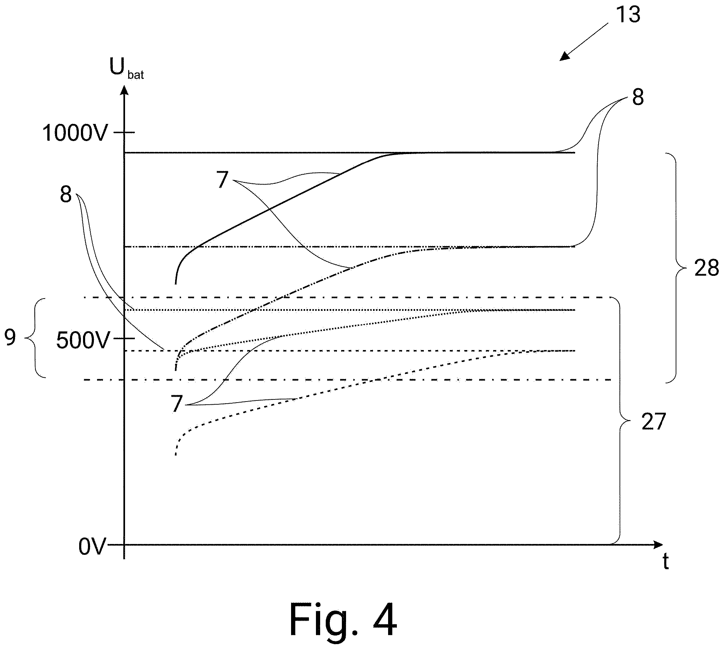

Hier und vorzugsweise ist vorgesehen, dass der Überlappbereich 9 mindestens 50 V, vorzugsweise mindestens 100 V, und/oder höchstens 300 V, vorzugsweise höchstens 200 V, groß ist, und/oder, dass der Ausgangsspannungsbereich der Stromrichteranordnung 4 mindestens 500 V, vorzugsweise mindestens 600 V, weiter vorzugsweise mindestens 700 V, groß ist. Hier und vorzugsweise ist der Ausgangsspannungsbereich der Stromrichteranordnung 4 720 V groß und reicht von 200 V bis 920 V. Der Überlappbereich 9 reicht hier und vorzugsweise von 400 V bis 500 V und ist somit 100 V groß. In Fig. 4 sind die verschiedenen Spannungsbereiche sowie beispielhafte Ladevorgänge 13 dargestellt. Es ist in Fig. 4 ersichtlich, dass nicht jeder Ladevorgang 13 in beiden Funktionszuständen durchführbar ist, weshalb die vorgeschlagene Auswahl notwendig ist. Die Ladevorgänge 13 in Fig. 4 sind mit einem sehr großen Spannungshub dargestellt und erreichen jeweils die Maximal-Ladespannung 8. Es darf angemerkt werden, dass diese großen Spannungshübe so gewählt wurde, damit die Figur besser lesbar ist. Auch die Maximal-Ladespannung 8 wird wohl in der Regel nicht erreicht, sondern der Ladevorgang 13 vorher unterbrochen.

Vorzugsweise reicht der Ausgangsspannungsbereich eines ersten der beiden Funktionszustände bis höchstens 900 V, vorzugsweise bis höchstens 750 V, weiter vorzugsweise bis höchstens 600 V. Hier und vorzugsweise reicht der Ausgangsspannungsbereich des ersten der beiden Funktionszustände bis 500 V.

Der Ausgangsspannungsbereich des zweiten der beiden Funktionszustände beginnt vorzugsweise bei wenigstens 200 V, vorzugsweise wenigstens 300 V, weiter vorzugsweise wenigstens 400 V, hier und vorzugsweise genau 400 V.

Hier und vorzugsweise beträgt der Ausgangsspannungsbereich des ersten Funktionszustandes 200 V bis 500 V und der Ausgangsspannungsbereich des zweiten Funktionszustandes 400 V bis 920 V. Der zweite Funktionszustand hat daher hier und vorzugsweise einen Ausgangsspannungsbereich, der knapp doppelt so groß ist (520 V), wie der Ausgangsspannungsbereich des ersten Funktionszustandes (300 V). Vorzugsweise ist der Ausgangsspannungsbereich des zweiten Funktionszustandes zumindest größer als der Ausgangsspannungsbereich des ersten Funktionszustandes.

Weiter ist hier und vorzugsweise vorgesehen, dass die Steuereinheit 5 den Funktionszustand auswählt, dessen Ausgangsspannungsbereich die Ist-Ladespannung 7 und die Ziel-Ladespannung umfasst, wenn nur einer der Ausgangsspannungsbereiche der beiden Funktionszustände die Ist-Ladespannung 7 und die Ziel-Ladespannung umfasst.

Wenn beide Ausgangsspannungsbereiche der beiden Funktionszustände die Ist-Ladespannung 7 und die Ziel-Ladespannung umfassen, wählt die Steuereinheit 5 vorzugsweise den Funktionszustand nach einem Verlustleistungsminimierungsalgorithmus aus, insbesondere derart, dass eine geringere Verlustleistung während eines erwarteten Ladevorgangs 13 und/oder bei der Ist-Ladespannung 7 und/oder bei der Ziel-Ladespannung erzielt wird.

Bezüglich der Leistungselektronik ist es hier und vorzugsweise so, dass die Stromrichteranordnung 4, insbesondere als erste Stufe, einen AC/DC Wandler mit einer Ausgangsspannung aufweist. Die Ausgangsspannung ist vorzugsweise eine Zwischenspannung 14. Fig. 3 zeigt die erste Stufe nicht, diese kann jedoch auf übliche Art und Weise, beispielsweise als Vollbrücke, ausgestaltet sein. Die Ausgangsspannung der ersten Stufe liegt als Zwischenspannung 14 am Eingang (links) der zweiten Stufe an.

Zusätzlich oder alternativ kann die Stromrichteranordnung 4, insbesondere als zweite Stufe, einen DC/DC Wandler 15 mit einem Transformator 16 und einer Eingangsspannung aufweisen, die vorzugsweise die Zwischenspannung 14 ist.

Vorzugsweise ist es so, dass der DC/DC Wandler 15 im ersten Funktionszustand eine ausgangsseitige Wechselspannung des Transformators 16 gleichrichtet und im zweiten Funktionszustand als Ladungspumpe fungiert und die ausgangsseitige Wechselspannung des Transformators 16 gleichrichtet und erhöht, insbesondere verdoppelt. Der DC/DC Wandler 15 ist vorliegend eine abgewandelte Dual-Active-Bridge. Wird das bereits erwähnte Schaltelement 6 geschlossen, fungiert die Ausgangsseite 11 als Ladungspumpe. Ist das Schaltelement 6 geöffnet, wird die Ausgangsspannung des Transformators 16 nur gleichgerichtet. Hier und vorzugsweise stellt der DC/DC Wandler 15 eine galvanische Trennung bereit.

Im Detail ist hier und vorzugsweise vorgesehen, dass der DC/DC Wandler 15 ausgangsseitig einen DC+ Anschluss 17 und einen DC- Anschluss 18 aufweist, dass der DC/DC Wandler 15 ausgangsseitig einen ersten Schaltungszweig 19 zwischen dem DC+ Anschluss 17 und dem DC- Anschluss 18 aufweist, der zwei in Reihe geschaltete Halbleiterschaltelemente 12, insbesondere Transistoren, aufweist, zwischen denen ein erster ausgangsseitiger Anschluss 20 des Transformators 16 angeschlossen ist, dass der DC/DC Wandler 15 ausgangsseitig einen zweiten Schaltungszweig 21 zwischen dem DC+ Anschluss 17 und dem DC- Anschluss 18 aufweist, der zwei in Reihe geschaltete Halbleiterbauelemente, insbesondere Dioden 22, aufweist, zwischen denen ein zweiter ausgangsseitiger Anschluss 23 des Transformators 16 und ein Verbindungszweig 24 angeschlossen sind, dass der DC/DC Wandler 15 ausgangsseitig einen dritten Schaltungszweig 25 zwischen dem DC+ Anschluss 17 und dem DC- Anschluss 18 aufweist, der zwei in Reihe geschaltete Kondensatoren 26 aufweist, zwischen denen der Verbindungszweig 24 angeschlossen ist, dass der Verbindungszweig 24 ein Schaltelement 6 aufweist, mit dem der Verbindungszweig 24 geschlossen und aufgetrennt werden kann, wodurch ein Wechsel zwischen den Funktionszuständen bewirkt wird. Im ersten Funktionszustand ist das Schaltelement 6 hier und vorzugsweise offen, im zweiten geschlossen. Statt der Dioden 22 können insbesondere auch Transistoren vorgesehen sein, wodurch eine bidirektionale Verwendung ermöglicht werden kann. Das Schaltelement 6 kann ein Relais oder ein Schütz oder ein Halbleiterschaltelement 12 sein.

Weiter ist hier und vorzugsweise vorgesehen, dass ein Umschalten zwischen den beiden Funktionszuständen unter Last hardwaretechnisch ausgeschlossen und/oder steuerungstechnisch gesperrt ist, vorzugsweise, dass ein Schalten des Schaltelements 6 im Verbindungszweig 24 unter Last hardwaretechnisch ausgeschlossen und/oder steuerungstechnisch gesperrt ist.

Der Begriff "unter Last" meint zumindest bei spezifizierter Maximallast, vorzugsweise grundsätzlich beim Laden mittels der Stromrichteranordnung 4. Der Begriff "hardwaretechnisch ausgeschlossen" meint, dass die Hardware nicht für ein entsprechendes Schalten ausgelegt ist. Ob es theoretisch möglich wäre, ist dabei nicht relevant.

Weiter ist hier und vorzugsweise vorgesehen, dass die, vorzugsweise invariable, Eingangsspannung des DC/DC Wandlers 15 nur im Ausgangsspannungsbereich des zweiten Funktionszustandes liegt, vorzugsweise, dass die Eingangsspannung mindestens 700 V, vorzugsweise mindestens 750 V, beträgt, und/oder, dass die Eingangsspannung höchstens 900 V, vorzugsweise höchstens 850 V beträgt. Hier und vorzugsweise beträgt die Eingangsspannung, hier die Zwischenspannung 14, 800 V.

Zusätzlich oder alternativ kann vorgesehen sein, dass die Eingangsspannung des DC/DC Wandlers 15 geteilt durch das Wicklungsverhältnis, hier 16:9, zwischen Eingangsseite 10 und Ausgangsseite 11 des DC/DC Wandlers 15 eine Spannung ergibt, die im ersten Ausgangsspannungsbereich 27 liegt, und/oder, nach Erhöhung durch die Ladungspumpe, im zweiten Ausgangsspannungsbereich 28 liegt, vorzugsweise mit einem Abstand von mindestens 10V, vorzugsweise mindestens 20V, zu den Rändern des jeweiligen Ausgangsspannungsbereichs.

Es ist bemerkenswert, dass die Eingangsspannung des DC/DC Wandlers 15 mit 800 V geteilt durch ein Wicklungsverhältnis von 16:9 "nur" 450 V ergibt, nach Verdopplung 900 V. Der Betrieb im ersten Funktionszustand über 450 V und im zweiten Funktionszustand über 900 V erfordert daher einen Boost-Betrieb. Dieser Boost-Betrieb wird für vergleichsweise kleine "Rest-Spannungsbereiche" (450 V bis 500 V respektive 900 V bis 920 V) benötigt. Diese Auswahl hat jedoch den Vorteil, dass die Effizienz des DC/DC Wandlers 15 besser auf Batteriespannungen von 400 V und 800 V angepasst werden kann. Es wird angenommen, dass die oberen Randbereiche der Spannungsbereiche nur selten zum Einsatz kommen, sodass deren Effizienz weniger relevant ist. Es wird daher vorschlagsgemäß in Kauf genommen, dass ein Boost-Betrieb notwendig ist, um deutlich häufiger relevante Spannungsbereiche, insbesondere für 400 V und 800 V Batterien, effizienter abzudecken.

Entsprechend ist hier und vorzugsweise vorgesehen, dass der DC/DC Wandler 15 zur Abdeckung des ersten Ausgangsspannungsbereichs 27 und/oder des zweiten Ausgangsspannungsbereichs 28 sowohl im Buck-Betrieb als auch im Boost-Betrieb betrieben wird, vorzugsweise, dass der DC/DC Wandler 15 als Dual-Active-Bridge per Phase-Shift Steuerung angesteuert wird, weiter vorzugsweise, dass der Übergang zwischen Buck-Betrieb und Boost-Betrieb nahtlos erfolgt. Das Effizienzmaximum des DC/DC Wandlers 15 liegt vorzugsweise bei 400 V respektive 800 V je nach Funktionszustand.

Wieder mit Blick auf Fig. 2 ist hier und vorzugsweise vorgesehen, dass die Schnellladestation 1 mehrere Leistungsmodule 3 mit jeweils einer Stromrichteranordnung 4 aufweist, vorzugsweise, dass die Steuereinheit 5 die Leistungsmodule 3 so steuert, dass alle an einem Ladevorgang 13 beteiligten Leistungsmodule 3 den gleichen Funktionszustand einnehmen. Wird ein weiteres Leistungsmodul 3 einem Ladevorgang 13 zugewiesen, so wird vorzugsweise erst das Schaltelement 6 geschaltet und anschließend eine elektrische Verbindung zwischen dem hinzukommenden Leistungsmodul 3 und den bereits am Ladevorgang 13 beteiligten Leistungsmodulen 3 hergestellt.

Weiter ist hier und vorzugsweise vorgesehen, dass die Stromrichteranordnung 4 nur auf dreiphasige 400 VAC eingangsseitig ausgelegt ist, und/oder, dass die Steuereinheit 5 eine Ausgangsleistung des Ladevorgangs 13 nach einem Effizienzalgorithmus abhängig vom Funktionszustand auf die Leistungsmodule 3 verteilt, um die Gesamteffizienz der am Ladevorgang 13 beteiligten Leistungsmodule 3 zu optimieren.

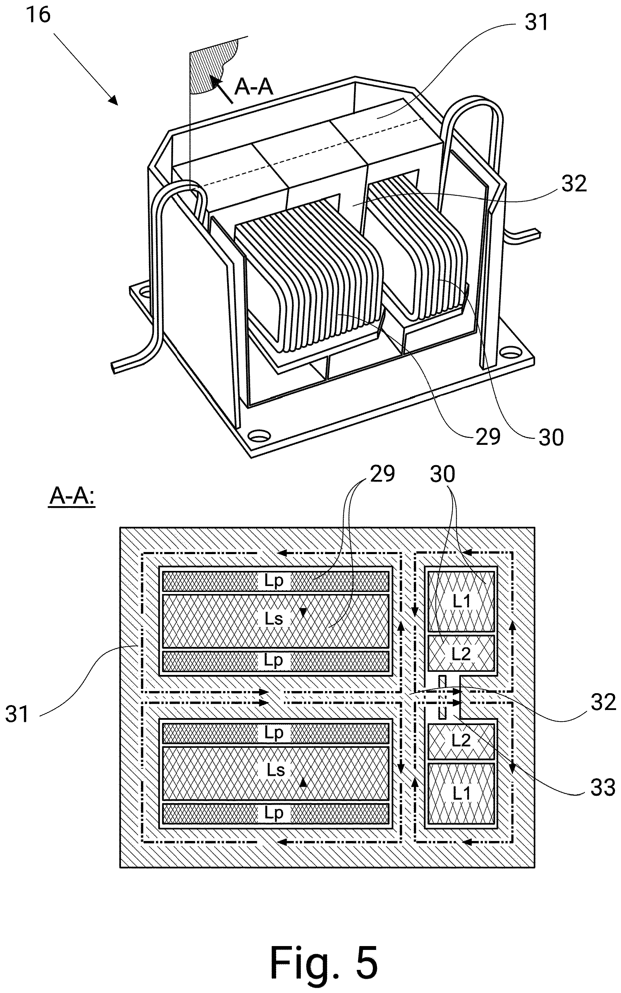

Fig. 5 zeigt eine weitere bevorzugte Ausgestaltung. Es kann vorgesehen sein, dass die Wicklungen 29 des Transformators 16 und mindestens eine, hier und vorzugsweise zwei, weitere Spulen 30 des DC/DC Wandlers 15 zusammen mit einem Magnetkern 31 in einem gemeinsamen Gehäuse angeordnet sind. Fig. 3 zeigt diese Spulen 30 im Schaltbild. Dabei wird darauf hingewiesen, dass eine der Spulen 30 optional ist. Fig. 5 zeigt die Anordnung der Spulen 30 und Wicklungen 29 perspektivisch bei geöffnetem Gehäuse und im Schnitt durch den Magnetkern 31. L1 und L2 sind dabei die beiden Spulen 30 und Lp und Ls die Wicklungen 29 des Transformators 16 (Primärseite p und Sekundärseite s). Andere Anordnungen mit gemeinsamem Magnetkern 31 sind ebenso möglich. Insgesamt führt eine solche Anordnung dazu, dass Platz eingespart wird, der genutzt werden kann, um größere ausgangsseitige Spannungsbereiche, die für den beschriebenen Überlappbereich 9 hilfreich sind, für den Transformator 16 zu realisieren. Auch wird Material gespart und die Montage des DC/DC Wandlers 15 wird vereinfacht.

Hier und vorzugsweise teilen sich die Magnetfelder der Spule 30 oder Spulen 30 und die Wicklungen 29 des Transformators 16 mindestens einen Teil des Magnetkerns 31. Hier und vorzugsweise sind die Magnetfelder in diesem geteilten Teil des Magnetkerns 31 gegenläufig, wodurch die Gesamtmagnetisierung verringert wird. Magnetkerne 31 von Transformatoren 16 bestehen in der Regel aus zueinander senkrechten Balken, also gerade verlaufende Abschnitte Kernmaterial, die geschlossene Formen bilden. Hier und vorzugsweise weist der Magnetkern 31 ein äußeres Viereck auf, das durch mindestens einen Trennbalken 32 in zwei Bereiche getrennt ist. In einem dieser Bereiche ist die eine Spule 30 oder sind, wie hier, beide Spulen 30 angeordnet. In dem anderen Bereich sind die beiden Wicklungen 29 angeordnet. In dem Trennbalken 32 verlaufen die Magnetfelder der Spulen 30 und der Wicklungen 29 gegenläufig. In dem Bereich der Spule 30 oder Spulen 30 kann ein Luftspalt 33 angeordnet sein. Hier und vorzugsweise weist der Magnetkern 31 einen weiteren Balken auf, der die beiden Bereich jeweils nochmal trennt und um den die Spulen 30 und Wicklungen 29 gewickelt sind. Alternativ können diese auch um das äußere Viereck gewickelt sein. Dann weist das äußere Viereck vorzugsweise ebenfalls Luftspalte 33 auf, insbesondere jeweils im Bereich der Wicklungen 29 und Spulen 30 (nicht dargestellt).

Vorgeschlagen wird gemäß einer weiteren Lehre ein Verfahren zum Betrieb einer vorschlagsgemäßen Schnellladestation 1, wobei die Schnellladestation 1 eine Steuereinheit 5 und eine Stromrichteranordnung 4 zur Wandlung einer Wechselspannung als Eingangsspannung der Schnellladestation 1 in eine Gleichspannung als Ausgangsspannung der Schnellladestation 1 aufweist, wobei die Stromrichteranordnung 4 als zwei einander ausschließende Funktionszustände einen ersten und einen zweiten Funktionszustand aufweist, die von der Steuereinheit 5 an der Stromrichteranordnung 4 eingestellt werden können, wobei die Stromrichteranordnung 4 in den Funktionszuständen unterschiedliche Ausgangsspannungsbereiche abdeckt, wobei die Steuereinheit 5 eine Kommunikation mit einem an die Schnellladestation 1 angeschlossenen Elektrofahrzeug und/oder Messwerte betreffend das Elektrofahrzeug auswertet und so Batterieparameter erhält und abhängig von den Batterieparametern den Funktionszustand einstellt.

Wesentlich nach dieser weiteren Lehre ist, dass die Ausgangsspannungsbereiche der beiden Funktionszustände einander in einem Überlappbereich 9 überlappen, dass die Batterieparameter eine Ist-Ladespannung 7 umfassen, und dass die Steuereinheit 5, wenn die Ist-Ladespannung 7 im Überlappbereich 9 liegt, abhängig von den Batterieparametern einen der Funktionszustände auswählt, um das Elektrofahrzeug zu laden.

Auf alle Ausführungen zu der vorschlagsgemäßen Schnellladestation 1 darf verwiesen werden.

### Bezugszeichenliste

- 1: Schnellladestation
- 2: Anschlusspunkt
- 3: Leistungsmodul
- 4: Stromrichteranordnung
- 5: Steuereinheit
- 6: Schaltelement
- 7: Ist-Ladespannung
- 8: Maximal-Ladespannung
- 9: Überlappbereich
- 10: Eingangsseite
- 11: Ausgangsseite
- 12: Halbleiterschaltelement
- 13: Ladevorgang
- 14: Zwischenspannung
- 15: DC/DC Wandler
- 16: Transformator
- 17: DC+ Anschluss
- 18: DC- Anschluss
- 19: erster Schaltungszweig
- 20: erster ausgangsseitiger Anschluss
- 21: zweiter Schaltungszweig
- 22: Diode
- 23: zweiter ausgangsseitiger Anschluss
- 24: Verbindungszweig
- 25: dritter Schaltungszweig
- 26: Kondensator
- 27: erster Ausgangsspannungsbereich
- 28: zweiter Ausgangsspannungsbereich
- 29: Wicklung
- 30: Spule
- 31: Magnetkern
- 32: Trennbalken
- 33: Luftspalt

## Patentansprüche

1. Schnellladestation für Elektrofahrzeuge, wobei die Schnellladestation (1) eine Steuereinheit (5) und eine Stromrichteranordnung (4) zur Wandlung einer Wechselspannung als Eingangsspannung der Schnellladestation (1) in eine Gleichspannung als Ausgangsspannung der Schnellladestation (1) aufweist, wobei die Stromrichteranordnung (4) als zwei einander ausschließende Funktionszustände einen ersten und einen zweiten Funktionszustand aufweist, die von der Steuereinheit (5) an der Stromrichteranordnung (4) eingestellt werden können, wobei die Stromrichteranordnung (4) in den Funktionszuständen unterschiedliche Ausgangsspannungsbereiche abdeckt, wobei die Steuereinheit (5) eine Kommunikation mit einem an die Schnellladestation (1) angeschlossenen Elektrofahrzeug und/oder Messwerte betreffend das Elektrofahrzeug auswertet und so Batterieparameter erhält und abhängig von den Batterieparametern den Funktionszustand einstellt,
**dadurch gekennzeichnet,**
**dass** die Ausgangsspannungsbereiche der beiden Funktionszustände einander in einem Überlappbereich (9) überlappen, dass die Batterieparameter eine Ist-Ladespannung (7) umfassen, und dass die Steuereinheit (5), wenn die Ist-Ladespannung (7) im Überlappbereich (9) liegt, abhängig von den Batterieparametern einen der Funktionszustände auswählt, um das Elektrofahrzeug zu laden.

2. Schnellladestation nach Anspruch 1, **dadurch gekennzeichnet, dass** die Batterieparameter eine Ziel-Ladespannung umfassen und dass die Steuereinheit (5) abhängig von der Ziel-Ladespannung den Funktionszustand auswählt, um das Elektrofahrzeug zu laden.

3. Schnellladestation nach Anspruch 1 oder 2, **dadurch gekennzeichnet, dass** der Überlappbereich (9) mindestens 50 V, vorzugsweise mindestens 100 V, und/oder höchstens 300 V, vorzugsweise höchstens 200 V, groß ist, und/oder, dass der Ausgangsspannungsbereich der Stromrichteranordnung (4) mindestens 500 V, vorzugsweise mindestens 600 V, weiter vorzugsweise mindestens 700 V, groß ist, vorzugsweise, dass der Ausgangsspannungsbereich eines ersten der beiden Funktionszustände bis höchstens 900 V, vorzugsweise bis höchstens 750 V, weiter vorzugsweise bis höchstens 600 V, reicht, und, dass der Ausgangsspannungsbereich des zweiten der beiden Funktionszustände bei wenigstens 200 V, vorzugsweise wenigstens 300 V, weiter vorzugsweise wenigstens 400 V, beginnt.

4. Schnellladestation nach einem der vorhergehenden Ansprüche, **dadurch gekennzeichnet, dass** die Steuereinheit (5) den Funktionszustand auswählt, dessen Ausgangsspannungsbereich die Ist-Ladespannung (7) und die Ziel-Ladespannung umfasst, wenn nur einer der Ausgangsspannungsbereiche der beiden Funktionszustände die Ist-Ladespannung (7) und die Ziel-Ladespannung umfasst.

5. Schnellladestation nach einem der vorhergehenden Ansprüche, **dadurch gekennzeichnet, dass** die Steuereinheit (5), wenn beide Ausgangsspannungsbereiche der beiden Funktionszustände die Ist-Ladespannung (7) und die Ziel-Ladespannung umfassen, den Funktionszustand nach einem Verlustleistungsminimierungsalgorithmus auswählt, insbesondere derart, dass eine geringere Verlustleistung während eines erwarteten Ladevorgangs (13) und/oder bei der Ist-Ladespannung (7) und/oder bei der Ziel-Ladespannung erzielt wird.

6. Schnellladestation nach einem der vorhergehenden Ansprüche, **dadurch gekennzeichnet, dass** die Stromrichteranordnung (4), insbesondere als erste Stufe, einen AC/DC Wandler mit einer Ausgangsspannung aufweist, die vorzugsweise eine Zwischenspannung (14) ist, und/oder, dass die Stromrichteranordnung (4), insbesondere als zweite Stufe, einen DC/DC Wandler (15) mit einem Transformator (16) und einer Eingangsspannung aufweist, die vorzugsweise die Zwischenspannung (14) ist, vorzugsweise, dass der DC/DC Wandler (15) im ersten Funktionszustand eine ausgangsseitige Wechselspannung des Transformators (16) gleichrichtet und im zweiten Funktionszustand als Ladungspumpe fungiert und die ausgangsseitige Wechselspannung des Transformators (16) gleichrichtet und erhöht, insbesondere verdoppelt.

7. Schnellladestation Anspruch 6, **dadurch gekennzeichnet, dass** der DC/DC Wandler (15) ausgangsseitig einen DC+ Anschluss (17) und einen DC- Anschluss (18) aufweist, dass der DC/DC Wandler (15) ausgangsseitig einen ersten Schaltungszweig (19) zwischen dem DC+Anschluss (17) und dem DC-Anschluss (18) aufweist, der zwei in Reihe geschaltete Halbleiterschaltelemente (12), insbesondere Transistoren, aufweist, zwischen denen ein erster ausgangsseitiger Anschluss (20) des Transformators (16) angeschlossen ist, dass der DC/DC Wandler (15) ausgangsseitig einen zweiten Schaltungszweig (21) zwischen dem DC+Anschluss (17) und dem DC-Anschluss (18) aufweist, der zwei in Reihe geschaltete Halbleiterbauelemente, insbesondere Dioden (22), aufweist, zwischen denen ein zweiter ausgangsseitiger Anschluss (23) des Transformators (16) und ein Verbindungszweig (24) angeschlossen sind, dass der DC/DC Wandler (15) ausgangsseitig einen dritten Schaltungszweig (25) zwischen dem DC+ Anschluss (17) und dem DC-Anschluss (18) aufweist, der zwei in Reihe geschaltete Kondensatoren (26) aufweist, zwischen denen der Verbindungszweig (24) angeschlossen ist, dass der Verbindungszweig (24) ein Schaltelement (6) aufweist, mit dem der Verbindungszweig (24) geschlossen und aufgetrennt werden kann, wodurch ein Wechsel zwischen den Funktionszuständen bewirkt wird.

8. Schnellladestation nach einem der vorhergehenden Ansprüche, **dadurch gekennzeichnet, dass** ein Umschalten zwischen den beiden Funktionszuständen unter Last hardwaretechnisch ausgeschlossen und/oder steuerungstechnisch gesperrt ist, vorzugsweise, dass ein Schalten des Schaltelements (6) im Verbindungszweig (24) unter Last hardwaretechnisch ausgeschlossen und/oder steuerungstechnisch gesperrt ist.

9. Schnellladestation nach einem der Ansprüche 6 bis 8, **dadurch gekennzeichnet, dass** die, vorzugsweise invariable, Eingangsspannung des DC/DC Wandlers (15) nur im Ausgangsspannungsbereich des zweiten Funktionszustandes liegt, vorzugsweise, dass die Eingangsspannung mindestens 700 V, vorzugsweise mindestens 750 V, beträgt, und/oder, dass die Eingangsspannung höchstens 900 V, vorzugsweise höchstens 850 V beträgt.

10. Schnellladestation nach einem der Ansprüche 6 bis 9, **dadurch gekennzeichnet, dass** die Eingangsspannung des DC/DC Wandlers (15) geteilt durch das Wicklungsverhältnis zwischen Eingangsseite (10) und Ausgangsseite (11) des DC/DC Wandlers (15) eine Spannung ergibt, die im ersten Ausgangsspannungsbereich (27) liegt, und/oder, nach Erhöhung durch die Ladungspumpe, im zweiten Ausgangsspannungsbereich (28) liegt, vorzugsweise mit einem Abstand von mindestens 10V, vorzugsweise mindestens 20V, zu den Rändern des jeweiligen Ausgangsspannungsbereichs.

11. Schnellladestation nach einem der Ansprüche 6 bis 10, **dadurch gekennzeichnet, dass** der DC/DC Wandler (15) zur Abdeckung des ersten Ausgangsspannungsbereichs (27) und/oder des zweiten Ausgangsspannungsbereichs (28) sowohl im Buck-Betrieb als auch im Boost-Betrieb betrieben wird, vorzugsweise, dass der DC/DC Wandler (15) als Dual-Active-Bridge per Phase-Shift Steuerung angesteuert wird, weiter vorzugsweise, dass der Übergang zwischen Buck-Betrieb und Boost-Betrieb nahtlos erfolgt.

12. Schnellladestation nach einem der vorhergehenden Ansprüche, **dadurch gekennzeichnet, dass** die Schnellladestation (1) mehrere Leistungsmodule (3) mit jeweils einer Stromrichteranordnung (4) aufweist, vorzugsweise, dass die Steuereinheit (5) die Leistungsmodule (3) so steuert, dass alle an einem Ladevorgang (13) beteiligten Leistungsmodule (3) den gleichen Funktionszustand einnehmen.

13. Schnellladestation nach einem der vorhergehenden Ansprüche, **dadurch gekennzeichnet, dass** die Stromrichteranordnung (4) nur auf dreiphasige 400 VAC eingangsseitig ausgelegt ist, und/oder, dass die Steuereinheit (5) eine Ausgangsleistung des Ladevorgangs (13) nach einem Effizienzalgorithmus abhängig vom Funktionszustand auf die Leistungsmodule (3) verteilt, um die Gesamteffizienz der am Ladevorgang (13) beteiligten Leistungsmodule (3) zu optimieren

14. Verfahren zum Betrieb einer Schnellladestation (1) nach einem der vorhergehenden Ansprüche, wobei die Schnellladestation (1) eine Steuereinheit (5) und eine Stromrichteranordnung (4) zur Wandlung einer Wechselspannung als Eingangsspannung der Schnellladestation (1) in eine Gleichspannung als Ausgangsspannung der Schnellladestation (1) aufweist, wobei die Stromrichteranordnung (4) als zwei einander ausschließende Funktionszustände einen ersten und einen zweiten Funktionszustand aufweist, die von der Steuereinheit (5) an der Stromrichteranordnung (4) eingestellt werden können, wobei die Stromrichteranordnung (4) in den Funktionszuständen unterschiedliche Ausgangsspannungsbereiche abdeckt, wobei die Steuereinheit (5) eine Kommunikation mit einem an die Schnellladestation (1) angeschlossenen Elektrofahrzeug und/oder Messwerte betreffend das Elektrofahrzeug auswertet und so Batterieparameter erhält und abhängig von den Batterieparametern den Funktionszustand einstellt,
**dadurch gekennzeichnet,**
**dass** die Ausgangsspannungsbereiche der beiden Funktionszustände einander in einem Überlappbereich (9) überlappen, dass die Batterieparameter eine Ist-Ladespannung (7) umfassen, und dass die Steuereinheit (5), wenn die Ist-Ladespannung (7) im Überlappbereich (9) liegt, abhängig von den Batterieparametern einen der Funktionszustände auswählt, um das Elektrofahrzeug zu laden.
